# EUROPÄISCHE PATENTSCHRIFT

(11) **EP 3 765 327 B1**
(45) Veröffentlichungstag und Bekanntmachung des Hinweises auf die Patenterteilung: **25.06.2025**
(21) Anmeldenummer: 19713369.7
(22) Anmeldetag: 12.03.2019
(51) Int. Cl.: B60L 5/36, B60L 5/42, B60L 53/10, B60L 53/14, B60L 53/35

(54) **KONTAKTEINHEIT**
CONTACT UNIT
UNITÉ DE CONTACT

(30) Priorität: 15.03.2018 DE 102018106047
(43) Veröffentlichungstag der Anmeldung: 20.01.2021
(73) Patentinhaber: Schunk Transit Systems GmbH, 35435 Wettenberg (DE)
(72) Erfinder: HEIEIS, Nils, 35423 Lich (DE); DOMES, Matthias, 61231 Bad Nauheim (DE); STAUBACH, Timo, 36358 Herbstein (DE); SCHNEIDER, Peter, 35112 Fronhausen (DE)
(74) Vertreter: advotec.
(86) Internationale Anmeldenummer: PCT/EP2019/056154
(87) Internationale Veröffentlichungsnummer: WO 2019/175166

(56) Entgegenhaltungen:
- EP-A2- 3 141 417
- EP-A2- 3 141 417
- WO-A1-2015/018887
- WO-A1-2016/128939
- DE-A1- 3 610 455
- DE-A1- 3 610 455
- DE-U1- 202015 100 623
- DE-U1- 202015 100 623
- DE-U1- 202015 100 623
- JP-A- H08 308 023
- JP-A- S62 126 095
- JP-A- S62 126 095
- JP-A- S63 202 202
- JP-A- S63 202 202
- US-A- 5 495 159
- US-A1- 2014 070 767
- US-A1- 2014 070 767

## Beschreibung

Die Erfindung betrifft eine Kontaktvorrichtung für ein Schnellladesystem für elektrisch angetriebene Fahrzeuge, insbesondere Elektrobusse oder dergleichen, wobei das Schnellladesystem eine Ladekontaktvorrichtung und die Kontaktvorrichtung mit einem Kontakteinheitenträger umfasst, wobei der Kontakteinheitenträger eine Mehrzahl von Kontakteinheiten aufweist, wobei mit der Kontakteinheit ein Ladekontakt der Ladekontaktvorrichtung zur Ausbildung einer Kontaktpaarung kontaktierbar ist, wobei die Kontaktvorrichtung oder die Ladekontaktvorrichtung eine Positioniereinrichtung umfasst, wobei mittels der Positioniereinrichtung der Kontakteinheitenträger relativ zu der Ladekontaktvorrichtung positionierbar ist, derart, dass eine elektrisch leitende Verbindung zwischen einem Fahrzeug und einer stationären Ladestation ausbildbar ist, wobei die Kontakteinheit ein Kontaktelement aufweist, wobei die Kontakteinheit eine Anschlussleitung zur Verbindung mit dem Fahrzeug oder der Ladestation aufweist.

Derartige Kontakteinheiten sind bereits aus dem Stand der Technik bekannt, und werden regelmäßig als eine Baugruppe einer Kontaktvorrichtung zur Schnellladung elektrisch angetriebener Fahrzeuge an einer Haltestelle beziehungsweise einem Haltepunkt eingesetzt. Im Nahverkehr eingesetzte elektrisch angetriebene Fahrzeuge, wie beispielsweise Busse, können unter anderem über eine Oberleitung kontinuierlich mit elektrischer Energie versorgt werden. Dies setzt jedoch das Vorhandensein beziehungsweise den Unterhalt eines Oberleitungssystems voraus. Um die Vorteile eines elektrischen Antriebs auch ohne ein Oberleitungsnetz nutzen zu können, ist es bekannt, öffentliche Verkehrsmittel mit Batterien oder auch anderen Arten von Energiespeichern auszustatten. Ein Dauerbetrieb des Verkehrsmittels kann dadurch gewährleistet werden, dass während eines Halts des Verkehrsmittels an einer Haltestelle eine Schnellladung der Batterien erfolgt.

Hier sind aus dem Stand der Technik verschiedene Schnellladesysteme zur Herstellung einer elektrisch leitenden Verbindung zwischen einer stationären Ladestation im Bereich einer Haltestelle und einem Fahrzeug beziehungsweise Elektrobus bekannt. So kann an einem Elektrobus ein sogenannter Stromabnehmer mit einer Schleifleiste auf einem Dach eines Elektrobusses angeordnet sein, wobei im Bereich der Haltestelle eine in Fahrtrichtung des Elektrobusses längs verlaufende Schiene über einer Fahrbahn aufgehängt ist. Bei einem Halt des Elektrobusses an der Haltestelle wird der Stromabnehmer von dem Dach des Busses nach oben an die Schiene bewegt, wodurch eine elektrische Verbindung für die Dauer des vorgesehenen Halts des Elektrobusses an der Haltestelle hergestellt wird, sodass in diesem Zeitraum eine Schnellladung erfolgen kann. Insbesondere sind jedoch zwei voneinander unabhängige Stromabnehmer und entsprechende Kontaktierbereiche an der Schiene erforderlich, um einen Ladestromkreis ausbilden zu können.

Weiter können Kontaktelemente für beispielsweise eine Steuerleitung, Erdung oder eine Datenübertragung erforderlich sein. Es werden dann an einer Kontaktvorrichtung eines Stromabnehmers beziehungsweise Schnellladesystems mehrere Kontaktelemente angeordnet, die mit einer entsprechenden Anzahl in Fahrtrichtung des Elektrobusses angeordneter Ladekontaktelemente, die beispielsweise aus parallelen Schienen ausgebildet sein können, kontaktiert werden können. Eine größere Anzahl von Kontaktpaarungen kann somit hergestellt werden.

Aus der WO 2015/01887 A1 ist ein Schnellladesystem bekannt, bei dem eine dachförmige Ladekontaktvorrichtung von einem übereinstimmend ausgebildeten Kontakteinheitenträger einer Kontaktvorrichtung kontaktiert wird. Der Kontakteinheitenträger wird dadurch in eine Kontaktposition geführt, dass Kontaktelemente in dem Kontakteinheitenträger an den dachförmigen Schrägen der Ladekontaktvorrichtung entlang gleiten können, derart, dass der Kontakteinheitenträger in der Ladekontaktvorrichtung zentriert wird.

Die US 2014/0070767 A1 offenbart ein Schnelladesystem für elektrisch angetriebene Fahrzeuge, das eine fahrzeugseitig angebrachte Ladekontaktvorrichtung und eine Kontaktvorrichtung mit einem Kontakteinheitenträger umfasst.

Aus der DE 20 2015 100 623 U1 ist eine Kontaktvorrichtung für ein Schnelladesystem für elektrisch angetriebene Fahrzeuge bekannt. Die Kontaktvorrichtung weist einen Kontakteinheitsträger mit einer Kontakteinheit auf, die ein Schleifstück umfasst.

Die WO 2015/018887 A1 zeigt eine Kontakteinheit mit den Merkmalen des Oberbegriffs des Anspruchs 1. Insbesondere ist hier ein Kontaktelement mit einem bolzenförmigen Kontakthöcker ausgebildet, der eine Kontaktfläche zur Kontaktierung eines Ladekontakts ausbildet.

Die US 5,495,159 A betrifft eine sogenannte Ladevorrichtung für ein fahrerloses Flurförderfahrzeug. Die Ladevorrichtung weist zumindest zwei Kontaktelemente auf, die an einem Schenkel eines Hebels montiert sind, wobei der Hebel um eine Achse schwenkbar gelagert ist. Eine elektrische Kontaktierung erfolgt über eine Schiene mit einem Kabel.

Die Kontaktelemente sind jeweils Teil einer Kontakteinheit, die an dem Kontakteinheitenträger fest montiert ist. Jede Kontakteinheit umfasst eine Kontaktelementführung innerhalb der das jeweilige Kontaktelement in Richtung seiner Längsachse relativ zum Kontakteinheitenträger bewegbar und federnd gelagert ist. Somit wird es möglich, einen eventuellen Winkelversatz beim Zusammenführen von Kontakteinheitenträger und Ladekontaktvorrichtung oder auch eine Neigung eines Busses an einer Haltestelle in Folge einer veränderten Zuladung oder einer Absenkung des Busses auszugleichen und stets eine sicherere Kontaktierung zur Verfügung zu stellen. Die jeweiligen Kontakteinheiten sind über jeweils eine oder mehrere Anschlussleitungen mit dem Fahrzeug verbunden. Insbesondere sind die Anschlussleitungen mittels Kabelschuhen mit der Kontaktelementführung verschraubt. Eine Stromübertragung erfolgt daher von beispielsweise einer elektrisch leitenden Schiene der Ladekontaktvorrichtung auf ein Kontaktelement und von diesem über einen Spalt, der eine Bewegung des Kontaktelements in der Kontaktelementführung erlaubt, auf die Kontaktelementführung, an die die Anschlussleitung geklemmt ist.

Zur Herstellung einer sicheren Stromübertragung von dem Kontaktelement auf die Kontaktelementführung wird Kontaktfett und eine Kontaktlamelle beziehungsweise ein Lamellenring verwendet. Nachteilig ist hier, dass der Kontakteinheitenträger Umwelteinflüssen, wie Schnee oder Regen sowie auch Dreck und Staub ausgesetzt ist, welcher am Kontaktelement beziehungsweise in den Spalt am Kontaktelement trotz Verwendung einer Ringdichtung eindringen kann. Dies kann in speziellen Fällen dazu führen, dass das Kontaktelement in der Kontaktelementführung blockiert beziehungsweise klemmt und so keine Kontaktierung oder auch eine undefinierte Kontaktierungsreihenfolge mit der Gefahr einer Ausbildung eines Lichtbogens möglich ist. Um ein Versagen bei kalter Witterung zu verhindern, kann es auch vorgesehen sein, eine Heizpatrone an der Kontaktelementführung anzuordnen. Weiter ist es bekannt, Kontaktelemente zu versilbern, um einen Übergangswiderstand im Bereich der Kontaktelementführung günstig zu beeinflussen. Sofern eine Kontakteinheit ausfällt, werden die übrigen Kontakteinheiten mit hohen Strömen durchflossen, was zu einer übermäßigen Erwärmung und zu einem Versagen des gesamten Schnellladesystems führen kann. Die Kontakteinheiten müssen daher in regelmäßigen Abständen ausgetauscht oder gewartet werden, damit eine verlässliche Kontaktierung sichergestellt werden kann.

Der vorliegenden Erfindung liegt daher die Aufgabe zugrunde, eine Kontakteinheit, eine Kontaktvorrichtung mit einer Kontakteinheit sowie ein Schnellladesystem vorzuschlagen, die beziehungsweise das einen kostengünstigen Betrieb des Verkehrsmittels und eine sichere Kontaktierung ermöglicht.

Diese Aufgabe wird durch eine Kontaktvorrichtung mit den Merkmalen des Anspruchs 1 und ein Schnellladesystem mit den Merkmalen des Anspruchs 18 gelöst.

Die Erfindung ist durch die Ansprüche definiert.

Bei der erfindungsgemäßen Kontaktvorrichtung für ein Schnellladesystem für elektrisch angetriebene Fahrzeuge, insbesondere Elektrobusse oder dergleichen, wobei das Schnellladesystem eine Ladekontaktvorrichtung und die Kontaktvorrichtung mit einem Kontakteinheitenträger umfasst, weist der Kontakteinheitenträger eine Mehrzahl von Kontakteinheiten auf, wobei mit der Kontakteinheit ein Ladekontakt der Ladekontaktvorrichtung zur Ausbildung einer Kontaktpaarung kontaktierbar ist, wobei die Kontaktvorrichtung oder die Ladekontaktvorrichtung eine Positioniereinrichtung umfasst, wobei mittels der Positioniereinrichtung der Kontakteinheitenträger relativ zu der Ladekontaktvorrichtung positionierbar ist, derart, dass eine elektrisch leitende Verbindung zwischen einem Fahrzeug und einer stationären Ladestation ausbildbar ist, wobei die Kontakteinheit ein Kontaktelement aufweist, wobei die Kontakteinheit eine Anschlussleitung zur Verbindung mit dem Fahrzeug oder der Ladestation aufweist, wobei das Kontaktelement an einem Drehlager der Kontakteinheit relativ zum Kontakteinheitenträger schwenkbar gehaltert ist, und dass das Kontaktelement aus einem mit dem Drehlager verbundenen Hebelarm mit einem bolzenförmigen Kontakthöcker ausgebildet ist, wobei der bolzenförmige Kontakthöcker eine Kontaktfläche zur Kontaktierung des Ladekontaktes ausbildet und in Richtung seiner Längsachse an dem Drehlager so schwenkbar ist, dass die Längsachse quer zu dem Drehlager angeordnet ist, und die Längsachse so in Art einer Tangente eines Schwenkradius des Drehlagers angeordnet ist, dass der Kontakthöcker bei der Kontaktierung mit einem Ladekontakt um das Drehlager herum verschwenkt wird, , wobei die Kontakteinheit ein Verbindungselement umfasst, mit dem das Kontaktelement an dem Kontakteinheitenträger angeordnet ist, wobei das Kontaktelement über das Drehlager mit dem Verbindungselement verbunden ist.

Dadurch, dass das Kontaktelement an dem Drehlager der Kontakteinheit relativ zum Kontakteinheitenträger schwenkbar gelagert ist, wird es möglich eine Bewegbarkeit des Kontaktelements mit einfachen Mitteln sicherzustellen. Die Gefahr eines Klemmens des Kontaktelements an dem Drehlager ist im Vergleich zu den aus dem Stand der Technik bekannten Kontaktelementführungen wesentlich geringer. Darüber hinaus ist ein Drehlager besonders einfach herzustellen und kann leicht gegen Umwelteinflüsse geschützt werden. Insgesamt können so Wartungsintervalle zur Prüfung und gegebenenfalls Austausch der Kontakteinheit wesentlich verlängert werden, wodurch das Verkehrsmittel kostengünstiger betrieben werden kann. Weiter ist eine Wahrscheinlichkeit eines Blockierens des Kontaktelements dann auch sehr gering, sodass das Schnellladesystem sicherer betrieben werden kann.

Das Kontaktelement ist aus einem mit dem Drehlager verbundenen Hebearm mit einem bolzenförmigen Kontakthöcker ausgebildet, wobei der bolzenförmige Kontakthöcker eine Kontaktfläche zur Kontaktierung des Ladekontakts ausbildet und in Richtung seiner Längsachse an dem Drehlager schwenkbar ist. Das Kontaktelement ist so besonders einfach herstellbar und es kann beispielsweise ein punktueller Kontakt mit einem Ladekontakt einer Ladekontaktvorrichtung ausgebildet werden.

Es ist vorteilhaft, wenn das bolzenförmige Kontaktelement an seinem Kontaktende mit gerundeten Kanten oder vollständig abgerundet ausgebildet ist. Das Kontaktelement kann dann an einem Ladekontakt entlang bewegt werden, ohne dass es zu einer größeren mechanischen Beschädigung des Ladekontakts oder des Kontaktelements kommt. Alternativ kann das Kontaktelement auch mit einer anderen geeigneten Gestalt ausgebildet sein. Wenn der bolzenförmige Kontakthöcker in Richtung seiner Längsachse an dem Drehlager schwenkbar ist, verläuft die Längsachse stets quer, vorzugsweise in einem Winkel von 90° relativ zu dem Drehlager. Der bolzenförmige Kontakthöcker kann dann so ausgebildet sein, dass die Längsachse in Art einer Tangente eines Schwenkradius des Drehlagers angeordnet ist. Der Hebelarm verbindet dann den Kontakthöcker mit dem Drehlager. Weiter kann das Kontaktelement aus Kupfer bzw. einer Kupferlegierung bestehen und/oder unversilbert sein. Kupfer eignet sich besonders gut zur Verwendung für elektrisch leitende Bauteile, wobei die Anschlussleitung ebenfalls aus Kupfer bestehen kann. Insbesondere Kupferlegierungen weisen eine vergleichsweise hohe Verschleißfestigkeit und Anlaufbeständigkeit auf. Da keine Stromübertragung von einer Oberfläche des Kontaktelements auf das Drehlager erfolgen muss, kann auf ein Versilbern des Kontaktelements vollständig verzichtet werden, was die Herstellungskosten für das Kontaktelement wesentlich herabsetzt.

Auch kann das Kontaktelement einstückig oder mehrteilig ausgebildet sein. So kann dann das Kontaktelement aus verschiedenen Materialien, die jeweils für ihren Einsatzzweck geeignet sind, hergestellt werden. Gleichwohl ist es möglich das Kontaktelement einstückig und damit einfach montierbar auszubilden.

Die Anschlussleitung kann unmittelbar an dem Kontaktelement befestigt sein. Es muss dann nicht mehr, wie bei aus dem Stand der Technik bekannten Kontaktelementen mit einer Kontaktelementführung, ein Spalt zwischen der Kontaktelementführung und dem Kontaktelement zur Übertragung von Strömen genutzt werden. Auch kann dann die Anschlussleitung zusammen mit dem Kontaktelement bewegt werden. Weiter sind leitende Fette, oder andere Bauteile zur Begünstigung einer Stromübertragung im Bereich einer Kontaktelementführung bzw. des Drehlagers nicht mehr erforderlich. Ein Übergangswiderstand zwischen der Anschlussleitung und dem Kontaktelement kann so wesentlich verringert werden.

Die Anschlussleitung kann einen Leiterquerschnitt von zumindest 50 mm², vorzugsweise 95 mm² aufweisen. So wird es möglich, mit der Kontakteinheit besonders hohe Ströme zu übertragen. Bei den aus dem Stand der Technik bekannten Kontakteinheiten sind mehrere Anschlussleitungen über Kabelschuhe an einer Kontaktelementführung angeschraubt. Wenn die Anschlussleitung unmittelbar an dem Kontaktelement befestigt ist, können auch höhere Ströme über die Anschlussleitung übertragen werden, weshalb ein derartig großer Leiterquerschnitt ausgewählt werden kann. Eine unerwünschte Erwärmung des Anschlussleiters kann so verhindert werden. Eine Querschnittsform des Anschlussleiters ist prinzipiell beliebig, weshalb der Anschlussleiter beispielsweise auch ein Litzenband sein kann. Prinzipiell kann die Anschlussleitung jedoch mit jedem beliebigen Leiterquerschnitt ausgebildet sein.

Das Drehlager kann an einer Achse des Drehlagers eine Lagerbuchse aus einem dielektrischen Material aufweisen. Prinzipiell ist das Material der Lagerbuchse beliebig auswählbar, wobei die Lagerbuchse dann auch aus Aluminium, einem Kunststoffmaterial oder einem anderen dielektrischen Material bestehen kann. Dies wird möglich, da mit einer übermäßigen Erwärmung der Kontakteinheit im Bereich des Drehlagers infolge eines Übergangswiderstands nicht mehr zu rechnen ist, wenn eine Anschlussleitung unmittelbar an dem Kontaktelement befestigt ist. Eine Lagerbuchse kann beispielsweise aus einem Material mit guten Gleit- oder Dichtungseigenschaften bestehen, beispielsweise PTFE. Die Achse des Drehlagers kann besonders einfach aus einem Bolzen oder einer Schraube ausgebildet werden. Durch die Verwendung einer Lagerbuchse aus dielektrischem Material wird es auch möglich das Kontaktelement von den übrigen Bauteilen der Kontakteinheit elektrisch zu trennen.

Eine Feder der Kontakteinheit kann eine Federkraft auf das Kontaktelement bewirken, derart, dass das Kontaktelement in Richtung zu einem Ladekontakt gedrückt wird. Eine federnde Lagerung des Kontaktelements kann durch eine Druckfeder, insbesondere Spiralfeder, an dem Kontaktelement beziehungsweise im Bereich des Drehlagers ausgeführt werden. Infolge dessen kann so ein punktueller Kontakt mit einem Ladekontakt unter einer Federvorspannung ausgebildet werden. Eine Federkraft kann so gewählt werden, dass das Kontaktelement stets in Richtung zu dem Ladekontakt gedrückt und in eine vordere Endlage bewegt wird, wenn das Kontaktelement nicht mit einem Ladekontakt kontaktiert ist.

Die Feder kann eine gewundene Torsionsfeder sein, die an einer Achse des Drehlagers gehaltert sein kann. Die Torsionsfeder kann in Art einer Schraubenfeder um die Achse des Drehlagers gewickelt sein. Jeweilige Enden der Feder können in radialer Richtung freistehend ausgebildet sein, sodass die Enden der Feder relativ zueinander um die Achse unter Ausbildung einer Federkraft verschwenkt werden können. Ein Ende der Torsionsfeder kann an dem Kontaktelement angelegt oder fixiert sein, wobei ein anderes Ende der Torsionsfeder an dem Drehlager oder einem weiteren Bauteil der Kontakteinheit, beispielsweise einem Verbindungselement, festgelegt sein kann. So wird es einfach möglich das Kontaktelement an dem Drehlager mittels der so ausgebildeten Federkraft in eine Endlage zu Schwenken.

Das Drehlager kann ein elektrisches Widerstandsheizelement aufweisen. Das elektrische Widerstandsheizelement kann beispielsweise in Art einer Heizbuchse oder Heizpatrone ausgebildet sein. Eine Heizpatrone kann einfach in eine Bohrung innerhalb einer Achse des Drehlagers oder in eine Bohrung innerhalb eines Lagergehäuses des Drehlagers eingesetzt werden. So wird es möglich auch bei tiefen Temperaturen ein Einfrieren des Drehlagers wirkungsvoll zu verhindern.

Erfindungsgemäß umfasst die Kontakteinheit ein Verbindungselement, mit dem das Kontaktelement an dem Kontakteinheitenträger anordbar ist, wobei das Kontaktelement über das Drehlager mit dem Verbindungselement verbunden ist. Demnach ist das Drehlager mit dem Verbindungselement an dem Kontakteinheitenträger so befestigt, dass das Kontaktelement an dem Kontakteinheitenträger schwenkbar ist. In einer besonders einfachen Ausführungsform kann das Verbindungselement mittels einer Schraubenverbindung an dem Kontakteinheitenträger befestigbar sein und eine Achse ausbilden, auf die das Kontaktelement einfach aufgesteckt werden kann. Die Achse kann auch eine Schraube sein, die in einer Bohrung oder Durchgangsöffnung in dem Verbindungselement eingesetzt ist.

Das Verbindungselement kann auch einen Anschlag aufweisen, der eine Schwenkbewegung des Kontaktelements relativ zu dem Kontakteinheitenträger begrenzt. Der Anschlag kann beispielsweise ein abgesetzter Durchmesser an dem Drehlager oder ein Absatz an dem Verbindungselement sein, an dem das Kontaktelement zur Anlage gelangen kann. Der Anschlag kann auch einfach durch einen Bolzen ausgebildet sein, der an dem Verbindungselement oder dem Kontaktelement befestigt ist. Mittels des Anschlages kann eine Schwenkbewegung des Kontaktelements in Richtung zu einem Ladekontakt und/oder in eine entgegengesetzte Richtung begrenzt sein. So kann dann auch eine definierte vordere Endlage und hintere Endlage des Kontaktelements an dem Drehlager begrenzt werden.

In einer vorteilhaften Ausführungsform kann das Verbindungselement eine Verbindungsbrücke ausbilden, mittels der zwei parallele Seitenwände des Kontakteinheitenträgers verbindbar sind. Das Verbindungselement kann dann nicht nur zur Halterung des Kontaktelements dienen, sondern auch als ein Bauteil des Kontakteinheitenträgers, dessen Seitenwände verbinden. Beispielsweise kann das Verbindungselement dann auch in Art eines verbindenden Längsprofils ausgebildet sein, das an seinen gegenüberliegenden Enden mittels Stift- und/oder Schraubverbindungen an die Seitenwände angeschlossen ist. Eine Achse des Drehlagers kann relativ zu den Seitenwänden parallel oder orthogonal an dem Verbindungselement beziehungsweise der Verbindungsbrücke angeordnet sein.

Weiter kann die Kontakteinheit zwei Kontaktelemente aufweisen, die jeweils an einem Drehlager relativ zum Kontakteinheitenträger schwenkbar gehaltert sind, wobei das Verbindungselement dann beide Kontaktelemente haltern kann. Das Verbindungselement kann dann so ausgestaltet sein, dass zwei Drehlager an dem Verbindungselement angeordnet oder ausgebildet sind, wobei die Drehlager relativ zueinander parallel angeordnet sein können. Es ist dann auch möglich den Aufbau eines Kontakteinheitenträgers wesentlich zu vereinfachen. Dabei kann auch vorgesehen sein, die jeweiligen Kontaktelemente über die Drehlager elektrisch voneinander zu entkoppeln, wobei das Verbindungselement selbst auch aus einem dielektrischen Werkstoff ausgebildet sein kann. Dies wird insbesondere möglich, wenn die jeweilige Anschlussleitung unmittelbar an dem zugehörigen Kontaktelement angeordnet ist.

Die Drehlager können relativ zueinander quer an dem Verbindungselement angeordnet sein. Dadurch wird es möglich die Kontakteinheit besonders kompakt auszubilden. Insbesondere können die Drehlager relativ zueinander orthogonal angeordnet sein.

Die Kontakteinheit kann so ausgebildet sein, dass über die Kontakteinheit ein Strom von 500 A bis 1.000 A, vorzugsweise von 800 A bei einer Spannung von 750 V übertragbar ist. Folglich ist eine Leistung von 375 kW bis 750 kW, vorzugsweise von 600 kW über die Kontakteinheit übertragbar. Es kann daher dann auch ausreichend sein lediglich eine Anschlussleitung zur Verbindung mit dem Kontaktelement vorzusehen. Auch kann eine schnellere Ladung des Fahrzeugs erfolgen, da höhere Ströme in kürzerer Zeit übertragen werden können. Gegebenenfalls kann auch an einem Kontakteinheitenträger eine Anzahl der Kontakteinheiten vermindert werden, wodurch die Kontaktvorrichtung kostengünstiger herstellbar wird.

Die Kontaktvorrichtung weist eine Mehrzahl von Kontakteinheiten, beispielsweise für unterschiedliche Phasen, eine Erdung oder eine Datenübertragung auf.

Die Positioniereinrichtung kann einen Pantografen oder eine Schwinge aufweisen, mittels dem beziehungsweise der der Kontakteinheitenträger in zumindest vertikaler Richtung zur Ladekontakteinheit positioniert werden kann, wobei die Kontaktvorrichtung an einem Fahrzeug oder an einer Ladestation angeordnet werden kann. Bei einer Schwinge kann ein ergänzendes Koppelgetriebe vorgesehen sein, welches den Kontakteinheitenträger relativ zu einer Ladekontaktvorrichtung stabilisiert beziehungsweise in der betreffenden Richtung ausrichtet. Ein Pantograf oder eine Schwinge beziehungsweise ein entsprechender mechanischer Antrieb ist besonders einfach und kostengünstig herstellbar. Ergänzend kann die Positioniereinrichtung auch eine Querführung aufweisen, mittels der der Kontakteinheitenträger quer relativ zur Ladekontaktvorrichtung beziehungsweise zu einer Fahrtrichtung des Fahrzeugs positioniert werden kann. Die Querführung kann an einem Fahrzeug oder einem Pantografen oder einer Schwinge der Positioniereinrichtung angeordnet sein. In beiden Fällen ist dann die Positioniereinrichtung beziehungsweise ein an der Positioniereinrichtung angeordneter Kontakteinheitenträger quer zur Fahrtrichtung des Fahrzeugs verschiebbar. Durch diese Verschiebbarkeit kann beispielsweise eine fehlerhafte Positionierung des Fahrzeugs an einer Haltestelle quer zur Fahrtrichtung ausgeglichen werden. Darüber hinaus können eventuelle Fahrzeugbewegungen in Folge eines einseitigen Absenkens des Fahrzeugs zum Ein- und Aussteigen von Personen so ausgeglichen werden, dass es zu keiner Verschiebung des Kontakteinheitenträgers relativ zur Ladekontaktvorrichtung in Querrichtung kommen kann. Die Kontaktvorrichtung kann beispielsweise auf einem Fahrzeugdach angeordnet sein, sodass der Kontakteinheitenträger von dem Fahrzeugdach ausgehend mittels der Positioniereinrichtung zu der Ladekontaktvorrichtung und zurück bewegt werden kann. Alternativ kann die Kontaktvorrichtung an der Ladestation angeordnet sein, wobei der Kontakteinheitenträger dann von einem Träger, wie beispielsweise einem Mast oder einer Brücke, an einer Haltestelle in Richtung auf ein Fahrzeugdach mit einer Ladekontaktvorrichtung und zurück bewegt werden kann.

Zumindest zwei Kontaktelemente können relativ zu einer der Ladekontakteinheit zugewandten Oberfläche des Kontakteinheitenträgers in unterschiedlichen Höhen hervorstehen. So ist es dann möglich, bei der Ausbildung von zumindest zwei Kontaktpaarungen zwischen jeweils einem Kontaktelement und einem Ladekontakt eine definierte Reihenfolge bei der Herstellung der Kontaktpaarungen sicher zu stellen. Bei einem Zusammenführen von Kontakteinheitenträger und Ladekontaktvorrichtung wird dann eine Kontaktreihenfolge zwangsläufig immer eingehalten und aufgrund der geometrischen Anordnung der Kontaktelemente relativ zu der Oberfläche des Kontakteinheitenträgers sichergestellt. Eine unbeabsichtigte oder fehlerhafte Kontaktierung beziehungsweise Ausbildung von Kontaktpaarungen kann so leicht verhindert werden.

Der Kontakteinheitenträger kann einen Korpus aufweisen, der mit Durchgangsöffnungen ausgebildet ist. Demnach kann der Korpus offen, das heißt von Luft durchströmbar, ausgebildet sein. Wenn der Korpus eine Reihe von Durchgangsöffnungen aufweist, können die an dem Korpus angeordneten Kontaktelemente auch einfach mittels Luft gekühlt werden, sodass eine unerwünschte Erwärmung der Kontaktelemente infolge einer Stromübertragung bei einem Ladevorgang mit einfachen Mitteln reduziert werden kann. Darüber hinaus kann der Korpus, und damit der Kontakteinheitenträger, mit einem geringeren Gewicht ausgebildet werden.

Der Korpus kann aus zwei parallelen Seitenwänden aus einem dielektrischen Material ausgebildet sein, wobei die Seitenwände mittels Verbindungsbrücken miteinander verbunden sein können.

Der Korpus kann beispielsweise aus einem Kunststoffmaterial ausgebildet sein, wobei die parallelen Seitenwände auch aus einem faserverstärkten Kunststoffmaterial ausgebildet sein können. Die Seitenwände sind so besonders einfach, stabil und kostengünstig herstellbar. Der Korpus kann dadurch ausgebildet werden, dass die Seitenwände mittels der Verbindungsbrücken verbunden sind. Die Verbindungsbrücken legen dann einen Relativabstand der Seitenwände fest und können beispielsweise mit den Seitenwänden verschraubt sein. Die Verbindungsbrücken können ebenfalls aus einem Kunststoffmaterial oder auch aus einem Metall bestehen und als ein einfacher, rechteckiger Streifen ausgebildet sein. Innerhalb der Verbindungsbrücken können Durchgangsöffnungen ausgebildet sein, in die dann jeweils eine Kontakteinheit nach Bedarf eingesetzt und befestigt ist. Eine besondere elektrische Isolierung der Kontakteinheiten oder der Verbindungsbrücken ist nicht erforderlich, wenn die Seitenwände aus dem dielektrischen Material ausgebildet sind.

Weitere vorteilhafte Ausführungsformen einer Kontaktvorrichtung ergeben sich aus den auf den Anspruch 1 rückbezogenen Unteransprüchen.

Das erfindungsgemäße Schnellladesystem weist eine Ladekontaktvorrichtung und eine erfindungsgemäße Kontaktvorrichtung auf.

Die Ladekontaktvorrichtung kann eine Aufnahmeöffnung für den Kontakteinheitenträger ausbilden, wobei der Kontakteinheitenträger in die Aufnahmeöffnung der Ladekontaktvorrichtung einsetzbar sein kann. Dabei kann die Aufnahmeöffnung vorzugsweise V-förmig ausgebildet sein. Bei einer Relativabweichung des Kontakteinheitenträgers bei einem Zusammenführen von Kontakteinheitenträger und Ladekontaktvorrichtung zur Aufnahmeöffnung bewirkt dann die V-förmige Ausbildung der Aufnahmeöffnung eine Zentrierung des Kontakteinheitenträgers. Die Aufnahmeöffnung bildet daher eine Führung für den Kontakteinheitenträger aus, die eine Abweichung von einer Kontaktposition an der Ladekontaktvorrichtung ausgleichen kann.

Der Kontakteinheitenträger kann alternativ eine Aufnahmeöffnung für die Ladekontaktvorrichtung ausbilden, wobei die Ladekontaktvorrichtung in die Aufnahmeöffnung des Kontakteinheitenträgers einsetzbar sein kann. Die Aufnahmeöffnung kann dann ebenfalls vorzugsweise V-förmig ausgebildet sein. Die Aufnahmeöffnung bildet dann auch eine Führung für die Ladekontaktvorrichtung aus.

Die Ladekontaktvorrichtung und/oder eine Querführung der Positioniervorrichtung kann ein elektrisches Widerstandsheizelement aufweisen. So kann dann beispielsweise eine Ablagerung von Reif, Eis oder Schnee an der Ladekontaktvorrichtung durch Erwärmen der Ladekontaktvorrichtung mittels des elektrischen Widerstandsheizelements verhindert werden. Auch kann die Querführung der Positioniervorrichtung mit dem elektrischen Widerstandsheizelement beheizt werden, sodass dann stets sichergestellt ist, dass die Querführung auch bei niedrigen Temperaturen bewegbar ist und nicht einfrieren kann.

Vorteilhafte Ausführungsformen des Schnellladesystems ergeben sich aus den auf den Anspruch 1 rückbezogenen Unteransprüchen.

Die Erfindung ist prinzipiell für jede Art von Elektrofahrzeug nutzbar, welches mit Batterien betrieben wird, die nachgeladen werden müssen.

Nachfolgend werden ein Erklärungsbeispiel und bevorzugte Ausführungsformen der Erfindung unter Bezugnahme auf die beigefügten Zeichnungen näher erläutert.

Es zeigen:
- **Fig. 1**: einen Kontakteinheitenträger nach dem Stand der Technik in einer Seitenansicht;
- **Fig. 2**: eine erste Ausführungsform einer Kontakteinheit in einer perspektivischen Ansicht;
- **Fig. 3**: eine Seitenansicht der Kontakteinheit aus **Fig. 2****;**
- **Fig. 4**: eine Schnittansicht entlang einer Linie IV - IV aus **Fig. 3****;**
- **Fig. 5**: eine Schnittansicht entlang einer Linie V - V aus **Fig. 3****;**
- **Fig. 6**: eine zweite Ausführungsform einer Kontakteinheit in einer perspektivischen Ansicht;
- **Fig. 7**: die Kontakteinheit aus **Fig. 6** in einer Seitenansicht;
- **Fig. 8**: die Kontakteinheit aus **Fig. 6** in einer Rückansicht;
- **Fig. 9**: die Kontakteinheit aus **Fig. 6** in einer Unteransicht;
- **Fig. 10**: eine Schnittansicht entlang einer Linie X - X aus **Fig. 9****;**
- **Fig. 11**: eine dritte Ausführungsform einer Kontakteinheit in einer perspektivischen Ansicht;
- **Fig. 12**: die Kontakteinheit aus **Fig. 11** in einer Draufsicht;
- **Fig. 13**: eine Schnittansicht entlang einer Linie XIII - XIII aus **Fig. 12****;**
- **Fig. 14**: die Kontakteinheit aus **Fig. 11** in einer Seitenansicht.

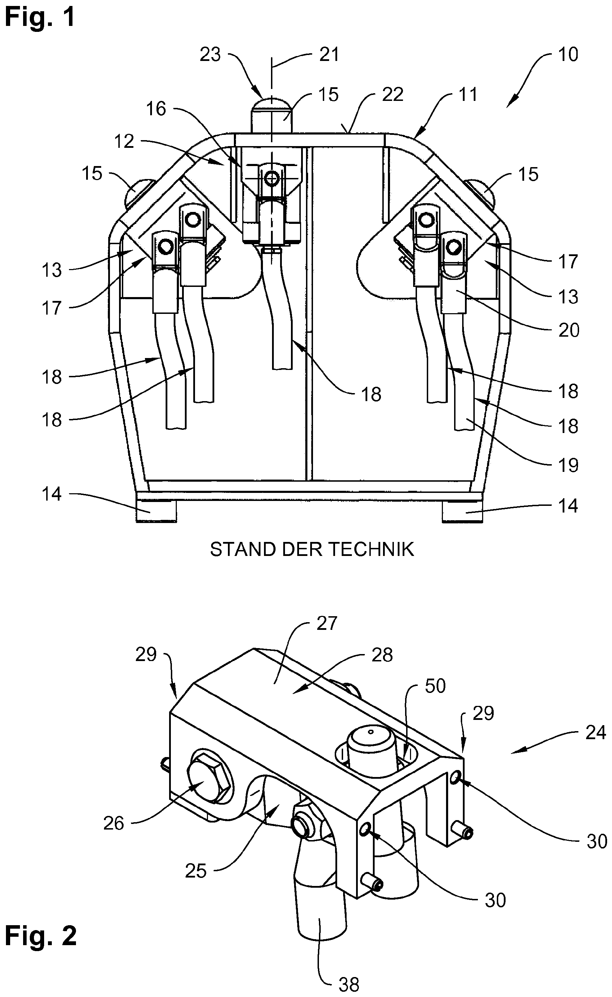

Die **Fig. 1** zeigt als ein nicht beanspruchtes Beispiel einen Kontakteinheitenträger 10, wie er aus dem Stand der Technik bekannt ist. Der Kontakteinheitenträger 10 ist Bestandteil einer hier nicht näher dargestellten Kontaktvorrichtung und an einer Positioniereinrichtung der Kontaktvorrichtung angeordnet, sodass der Kontakteinheitenträger 10 relativ zu einer Ladekontaktvorrichtung, die hier ebenfalls nicht dargestellt ist, bewegbar und mit dieser kontaktierbar ist. Der Kontakteinheitenträger 10 ist aus einem Korpus 11 mit Kontakteinheiten 12, 13 und Führungselementen 14 zur Befestigung an einer Querführung der Positioniereinrichtung ausgebildet. Die Kontakteinheiten 12 und 13 weisen jeweils ein Kontaktelement 15, Kontaktelementführungen 16 beziehungsweise 17 und Anschlussleitungen 18 auf. Die Anschlussleitungen sind aus Leitern 19 mit Kabelschuhen 20 ausgebildet, wobei die Kabelschuhe 20 an der Kontaktelementführung 16 beziehungsweise 17 zur Herstellung eines elektrischen Verbindungskontakts verschraubt sind. Die Kontaktelemente 15 sind in Richtung ihrer Längsachse 21 in der Kontaktelementführung 16 bewegbar, überragen eine Oberfläche 22 des Gehäuses 11 und sind mit einer Federkraft beaufschlagt. Zur Ausbildung einer Kontaktpaarung wird ein Kontaktende 23 mit einem Ladekontakt der Ladekontaktvorrichtung kontaktiert, wobei das Kontaktelement 15 dann ein Stück weit in die Kontaktelementführung 16 hinein gedrückt wird. Eine Stromübertragung erfolgt dann von dem Ladekontakt zu dem Kontaktelement 15 und von diesem auf die Kontaktelementführung 16 beziehungsweise 17, die ihrerseits mit der Anschlussleitung 18 verbunden ist. Insbesondere an den Kontaktelementführungen 17 sind zwei Anschlussleitungen 18 befestigt, um hohe Ströme über die Anschlussleitungen 18 leiten zu können.

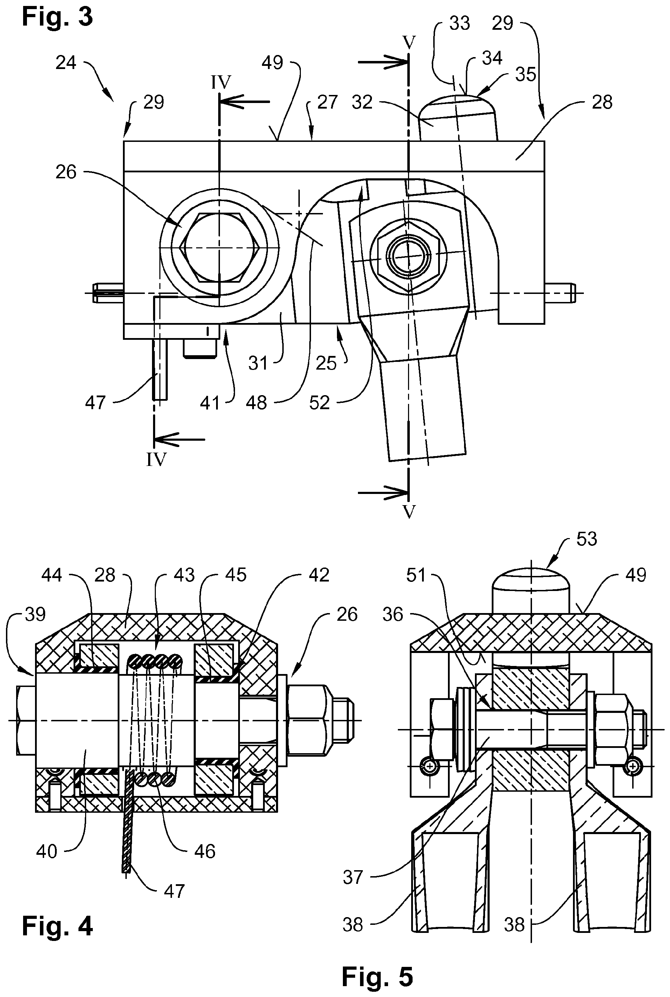

Eine Zusammenschau der **Fig. 2** bis **5** zeigt als ein Ausführungsbeispiel der Erfindung eine Kontakteinheit 24, die an einem hier nicht näher dargestellten Korpus eines Kontakteinheitenträgers befestigbar ist. Die Kontakteinheit 24 umfasst ein Kontaktelement 25, ein Drehlager 26 und ein Verbindungselement 27, welches eine Verbindungsbrücke 28 ausbildet. Das Verbindungselement 27 weist an seinen jeweiligen Enden 29 Bohrungen 30 zur Verbindung mit den hier nicht dargestellten Seitenwänden auf. Das Kontaktelement 25 ist aus einem Hebelarm 31 und einem bolzenförmigen Kontakthöcker 32 ausgebildet. Der Kontakthöcker 32 ist in Richtung seiner Längsachse 33 an dem Drehlager 26 schwenkbar gelagert und kann mit einer Oberfläche 34 an einem Kontaktende 35 des Kontakthöckers 32 einen hier nicht dargestellten Ladekontakt einer Ladekontaktvorrichtung kontaktieren.

Der Hebelarm 31 weist eine Durchgangsöffnung 36 auf, in die eine Schraube 37 zum Klemmen von Kabelschuhen 38 hier nicht weiter dargestellter Anschlussleitungen an dem Kontaktelement 25 eingesetzt ist. Weiter ist in dem Verbindungselement 27 eine Durchgangsöffnung 39 ausgebildet, in die eine Achse 40 des Drehlagers 26 eingesteckt und durch Verschrauben befestigt ist. Der Hebelarm 31 weist hier an einem den Kontakthöcker 32 abgewandten Ende 41 ebenfalls eine Durchgangsöffnung 42 sowie eine quer zur Durchgangsöffnung 42 verlaufende Nut 43 auf. Auf der Achse 40 sind Lagerschalen 44 und 45 angeordnet, derart, dass der Hebelarm 31 beziehungsweise das Kontaktelement 25 an dem Drehlager 26 weitestgehend spielfrei schwenkbar ist. Die Achse 40 umgebend ist innerhalb der Nut 43 eine Feder 46 der Kontakteinheit 24 angeordnet, wobei ein Federende 47 an dem Verbindungselement 27 und ein weiteres Federende 48, wie hier angedeutet, innerhalb der Nut 43 an dem Hebelarm 31 anliegt, und so eine Federkraft auf den Hebelarm 31 durch eine Vorspannung der Feder 46 bewirkt.

Innerhalb des Verbindungselements 27 ist in einer oberen Oberfläche 49 eine Durchgangsöffnung 50 für den Kontakthöcker 32 ausgebildet, sodass der Kontakthöcker 32 die obere Oberfläche 49 überragt. Eine untere Oberfläche 51 des Verbindungselements 27 im Bereich der Durchgangsöffnung 50 dient hier als ein Anschlag 52 zur Begrenzung der hier dargestellten oberen Endlage 53 des Kontaktelements 25. Wenn das Kontaktelement 25 beziehungsweise der Kontakthöcker 32 mit einem hier nicht dargestellten Ladekontakt kontaktiert wird, wird der Kontakthöcker 32 in die Durchgangsöffnung 50 entgegen der Federkraft der Feder 46 hineingedrückt und dabei um das Drehlager 26 herum verschwenkt.

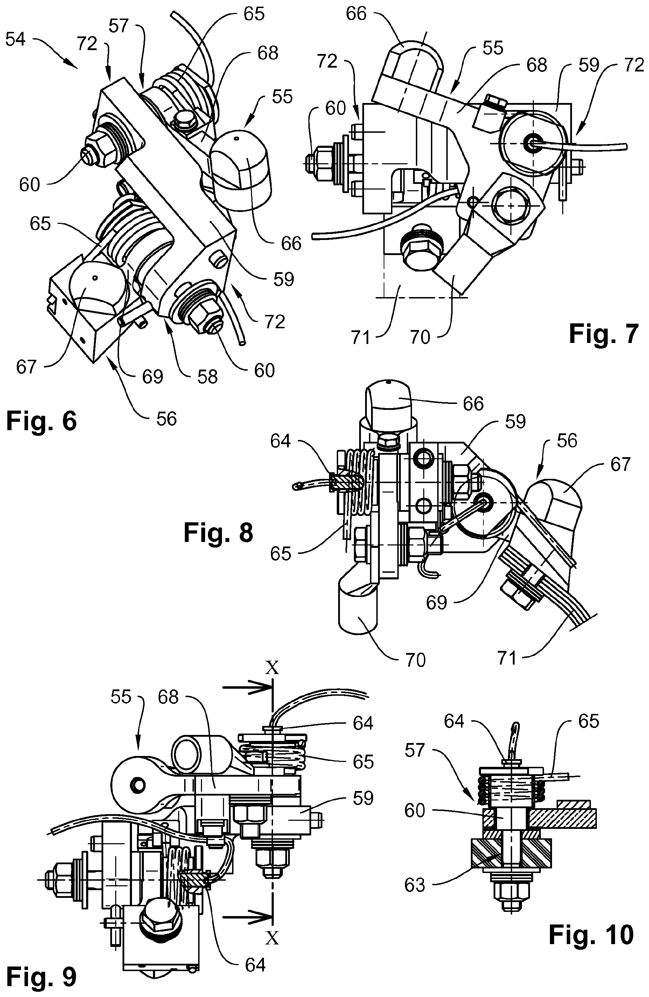

Eine Zusammenschau der **Fig. 6** bis **10** zeigt als ein Ausführungsbeispiel der Erfindung eine Kontakteinheit 54 mit Kontaktelementen 55 und 56, Drehlagern 57 und 58 und einem Verbindungselement 59. An dem Verbindungselement 59 ist mittels jeweils einer Schraube 60 das Drehlager 57 beziehungsweise 58 ausgebildet, wobei die Schraube 60 eine Achse 63 des Drehlagers 57 beziehungsweise 58 ausbildet. In die Achse 63 ist ein elektrisches Widerstandsheizelement 64 zur Beheizung des Drehlagers 57 beziehungsweise 58 eingesteckt. Weiter ist die Achse 63 von einer Feder 65 umgeben. Die Kontaktelemente 55 und 56 weisen jeweils einen bolzenförmigen Kontakthöcker 66 beziehungsweise 67 und Hebelarme 68 beziehungsweise 69 auf, die an den Drehlagern 57 beziehungsweise 58 mittels der Schrauben 60 befestigt sind. An dem Kontaktelement 55 ist ein Kabelschuh 70 einer hier nicht dargestellten Anschlussleitung und an dem Kontaktelement 56 ein Litzenband 71 unmittelbar befestigt. Weiter kann das Verbindungselement 59 an Enden 72 an hier nicht näher dargestellten Seitenwänden eines Korpus einer Kontaktvorrichtung befestigt werden.

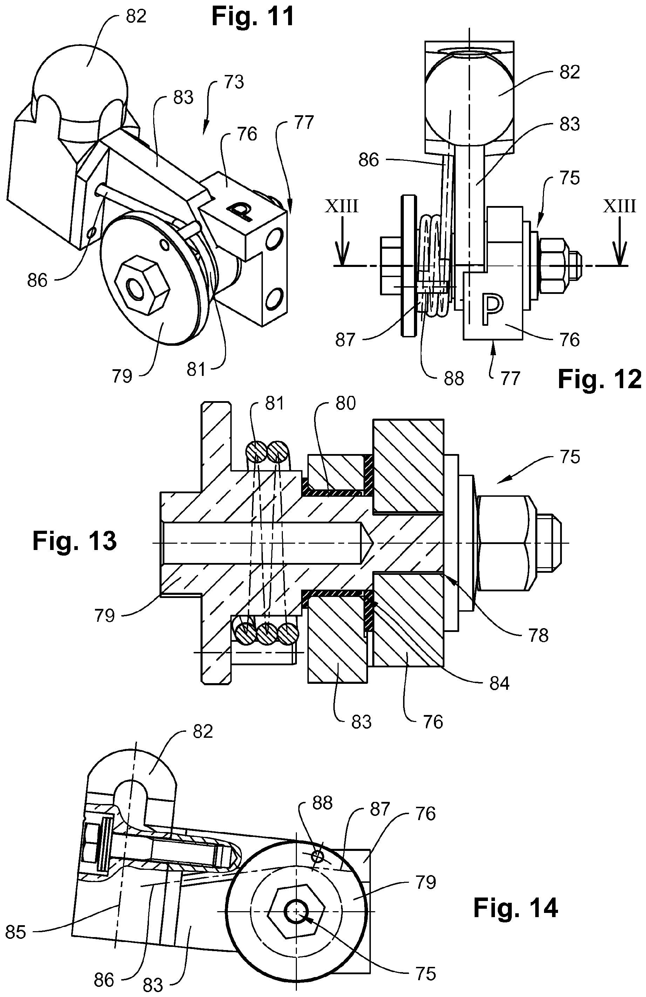

Eine Zusammenschau der **Fig. 11** bis **14** zeigt als ein Ausführungsbeispiel der Erfindung eine Kontakteinheit 73, die aus einem Kontaktelement 74, einem Drehlager 75 und einem Verbindungselement 76 ausgebildet ist. Das Verbindungselement 76 ist hier an einem Ende 77 an einer hier nicht dargestellten Seitenwand eines Korpus eines Kontakteinheitenträgers beziehungsweise einer Kontaktvorrichtung befestigbar. In dem Verbindungselement 76 ist eine Durchgangsöffnung 78 ausgebildet, in die eine Achse 79 des Drehlagers 75 eingesteckt und verschraubt ist. Auf der Achse 79 sind eine Lagerschale 80 und eine Feder 81 angeordnet. Das Kontaktelement 74 ist hier zweiteilig aus einem bolzenförmigen Kontakthöcker 82 und einem Hebelarm 83, die miteinander verschraubt sind, ausgebildet. In dem Hebelarm 83 ist ebenfalls eine Durchgangsöffnung 84 ausgebildet, und der Hebelarm 83 ist mit der Durchgangsöffnung 84 auf die Lagerschale 80 aufgesteckt. Der bolzenförmige Kontakthöcker 82 ist so um das Drehlager 75 in Richtung seiner Längsachse 85 schwenkbar. Die Feder 81 liegt mit einem Federende 86 an dem Hebelarm 83 an beziehungsweise ist an diesem befestigt, wobei ein weiteres Federende 87 an einem Bolzen 88 der Achse 79 anliegt. Durch eine Vorspannung der Feder 81 kann so eine Federkraft auf den Hebelarm 83 und damit in Richtung der Längsachse 85 bewirkt werden.

## Patentansprüche

1. Kontaktvorrichtung für ein Schnellladesystem für elektrisch angetriebene Fahrzeuge, insbesondere Elektrobusse oder dergleichen, wobei das Schnelladesystem eine Ladekontaktvorrichtung und die Kontaktvorrichtung mit einem Kontakteinheitenträger (10) umfasst, wobei der Kontakteinheitenträger eine Mehrzahl von Kontakteinheiten (24, 54, 73) aufweist, wobei mit der Kontakteinheit ein Ladekontakt der Ladekontaktvorrichtung zur Ausbildung einer Kontaktpaarung kontaktierbar ist, wobei die Kontaktvorrichtung oder die Ladekontaktvorrichtung eine Positioniereinrichtung umfasst, wobei mittels der Positioniereinrichtung der Kontakteinheitenträger relativ zu der Ladekontaktvorrichtung positionierbar ist, derart, dass eine elektrisch leitende Verbindung zwischen einem Fahrzeug und einer stationären Ladestation ausbildbar ist, wobei die Kontakteinheit (24, 54, 73) ein Kontaktelement (25, 55, 56, 74) aufweist, wobei die Kontakteinheit (24, 54, 73) eine Anschlussleitung (38, 70, 71) zur Verbindung mit dem Fahrzeug oder der Ladestation aufweist, wobei das Kontaktelement (25, 55, 56, 74) an einem Drehlager (26, 57, 58, 75) der Kontakteinheit (24, 54, 73) relativ zum Kontakteinheitenträger schwenkbar gehaltert ist, und dass das Kontaktelement (25, 55, 56, 74) aus einem mit dem Drehlager (26, 57, 58, 75) verbundenen Hebelarm (31, 68, 69, 83) mit einem bolzenförmigen Kontakthöcker (32, 66, 67, 82) ausgebildet ist, wobei der bolzenförmige Kontakthöcker (32, 66, 67, 82) eine Kontaktfläche (34) zur Kontaktierung des Ladekontaktes ausbildet und in Richtung seiner Längsachse (33, 85) an dem Drehlager (26, 57, 58, 75) so schwenkbar ist, dass die Längsachse (33, 85) quer zu dem Drehlager (26, 57, 58, 75) angeordnet ist, und die Längsachse (33, 85) so in Art einer Tangente eines Schwenkradius des Drehlagers (26, 57, 58, 75) angeordnet ist, dass der Kontakthöcker (32, 66, 67, 82) bei der Kontaktierung mit einem Ladekontakt um das Drehlager (26, 57, 58, 75) herum verschwenkt wird, wobei die Kontakteinheit (24, 54, 73) ein Verbindungselement (27, 59, 76) umfasst, mit dem das Kontaktelement (25, 55, 56, 74) an dem Kontakteinheitenträger angeordnet ist, wobei das Kontaktelement (25, 55, 56, 74) über das Drehlager (26, 57, 58, 75) mit dem Verbindungselement 27, 59, 76) verbunden ist.

2. Kontaktvorrichtung nach Anspruch 1,
**dadurch gekennzeichnet,**
**dass** das Kontaktelement (25, 55, 56, 74) einstückig oder mehrteilig ausgebildet ist.

3. Kontaktvorrichtung nach Anspruch 1 oder 2,
**dadurch gekennzeichnet,**
**dass** die Anschlussleitung (38, 70, 71) unmittelbar an dem Kontaktelement (25, 55, 56, 74) befestigt ist.

4. Kontaktvorrichtung nach einem der vorangehenden Ansprüche,
**dadurch gekennzeichnet,**
**dass** die Anschlussleitung (38, 70, 71) einen Leiterquerschnitt von zumindest 50 mm², vorzugsweise 95 mm² aufweist.

5. Kontaktvorrichtung nach einem der vorangehenden Ansprüche,
**dadurch gekennzeichnet,**
**dass** das Drehlager (26, 57, 58, 75) an einer Achse (40, 63, 79) des Drehlagers (26, 57, 58, 75) eine Lagerbuchse (44, 45, 80) aus einem dielektrischen Material aufweist.

6. Kontaktvorrichtung nach einem der vorangehenden Ansprüche,
**dadurch gekennzeichnet,**
**dass** eine Feder (46, 65, 81) der Kontakteinheit (24, 54, 73) eine Federkraft auf das Kontaktelement (25, 55, 56, 74) bewirkt, derart, dass das Kontaktelement (25, 55, 56, 74) in Richtung zu einem Ladekontakt gedrückt wird.

7. Kontaktvorrichtung nach Anspruch 6,
**dadurch gekennzeichnet,**
**dass** die Feder (46, 65, 81) eine gewundene Torsionsfeder ist, die an einer Achse (40, 63, 79) des Drehlagers (26, 57, 58, 75) gehaltert ist.

8. Kontaktvorrichtung nach einem der vorangehenden Ansprüche,
**dadurch gekennzeichnet,**
**dass** das Drehlager (26, 57, 58, 75) ein elektrisches Widerstandsheizelement (64) aufweist.

9. Kontaktvorrichtung nach einem der vorangehenden Ansprüche,
**dadurch gekennzeichnet,**
**dass** das Verbindungselement (27, 59, 76) einen Anschlag (52) aufweist, der eine Schwenkbewegung des Kontaktelements (25, 55, 56, 74) relativ zu dem Kontakteinheitenträger begrenzt.

10. Kontaktvorrichtung nach einem der vorangehenden Ansprüche,
**dadurch gekennzeichnet,**
**dass** das Verbindungselement (27, 59, 76) eine Verbindungsbrücke (28) ausbildet, mittels der zwei parallele Seitenwände des Kontakteinheitenträges verbindbar sind.

11. Kontaktvorrichtung nach einem der vorangehenden Ansprüche,
**dadurch gekennzeichnet,**
**dass** die Kontakteinheit (24, 54, 73) zwei Kontaktelemente (25, 55, 56, 74) aufweist, die jeweils an einem Drehlager (26, 57, 58, 75) relativ zum Kontakteinheitenträger schwenkbar gehaltert sind, wobei
das Verbindungselement (27, 59, 76) beide Kontaktelemente (25, 55, 56, 74) haltert.

12. Kontaktvorrichtung nach einem der vorangehenden Ansprüche,
**dadurch gekennzeichnet,**
**dass** die Drehlager (56, 57, 58, 75) relativ zueinander quer an dem Verbindungselement (27, 59, 76) angeordnet sind.

13. Kontaktvorrichtung nach einem der vorangehenden Ansprüche,
**dadurch gekennzeichnet,**
**dass** die Kontakteinheit (24, 54, 73) so ausgebildet ist, dass über die Kontakteinheit (24, 54, 73) ein Strom von 500 A bis 1000 A, vorzugsweise von 800 A bei einer Spannung von 750 V übertragbar ist.

14. Kontaktvorrichtung nach einem der vorangehenden Ansprüche,
**dadurch gekennzeichnet,**
**dass** die Positioniereinrichtung einen Pantografen oder eine Schwinge aufweist, mittels dem bzw. der der Kontakteinheitenträger in zumindest vertikaler Richtung zur Ladekontakteinheit positionierbar ist,
wobei die Kontaktvorrichtung an einem Fahrzeug oder einer Ladestation anordbar ist.

15. Kontaktvorrichtung nach Anspruch 13 oder 14,
**dadurch gekennzeichnet,**
**dass** zumindest zwei Kontaktelemente (25, 55, 56, 74) relativ zu einer der Ladekontakteinheit zugewandten Oberfläche (49) des Kontakteinheitenträgers in unterschiedlichen Höhen hervorstehen.

16. Kontaktvorrichtung nach einem der Ansprüche 13 bis 15,
**dadurch gekennzeichnet,**
**dass** der Kontakteinheitenträger einen Korpus aufweist, der mit Durchgangsöffnungen ausgebildet ist.

17. Kontaktvorrichtung nach Anspruch 16,
**dadurch gekennzeichnet,**
**dass** der Korpus aus zwei parallelen Seitenwänden aus einem dielektrischen Material ausgebildet ist, wobei die Seitenwände mittels Verbindungsbrücken (28) miteinander verbunden sind.

18. Schnellladesystem mit einer Ladekontaktvorrichtung und einer Kontaktvorrichtung nach einem der vorangehenden Ansprüche.

19. Schnelladesystem nach Anspruch 18,
**dadurch gekennzeichnet,**
**dass** die Ladekontaktvorrichtung eine Aufnahmeöffnung für den Kontakteinheitenträger ausbildet, wobei der Kontakteinheitenträger in die Aufnahmeöffnung der Ladekontaktvorrichtung einsetzbar ist.

20. Schnelladesystem nach Anspruch 18,
**dadurch gekennzeichnet,**
**dass** der Kontakteinheitenträger eine Aufnahmeöffnung für die Ladekontaktvorrichtung ausbildet, wobei die Ladekontaktvorrichtung in die Aufnahmeöffnung des Kontakteinheitenträgers einsetzbar ist.

21. Schnelladesystem nach einem der Ansprüche 18 bis 20,
**dadurch gekennzeichnet,**
**dass** die Ladekontaktvorrichtung und/oder eine Querführung der Positioniervorrichtung ein elektrisches Widerstandsheizelement aufweist.

## Claims

1. A contact device for a fast charging system for electrically driven vehicles, in particular electric busses or the like, the fast charging system comprising a charging contact device and the contact device having a contact unit carrier (10), the contact unit carrier having a plurality of contact units (24, 54, 73), a charging contact of the charging contact device being electrically connectable to the contact unit to form a contact pair, the contact device or the charging contact device comprising a positioning device, the contact unit carrier being positionable relative to the charging contact device by means of the positioning device in such a manner that an electrically conductive connection is formed between a vehicle and a stationary charging station, the contact unit (24, 54, 73) comprising a contact element (25, 55, 56, 74), the contact unit (24, 54, 73) having a connecting lead (38, 70, 71) for being connected to the vehicle or the charging station, the contact element (25, 55, 56, 74) being mounted on a pivot bearing (26, 57, 58, 75) of the contact unit (24, 54, 73) so as to be pivotable relative to the contact unit carrier, the contact element (25, 55, 56, 74) being formed by a lever arm (31, 68, 69, 83) which is connected to the pivot bearing (26, 57, 58, 75), said lever arm (31, 68, 69, 83) having a bolt-shaped contact bump (32, 66, 67, 82), said bolt-shaped contact bump forming a contact surface (34) for contacting the charging contact and being pivotable on the pivot bearing (26, 57, 58, 75) in the direction of its longitudinal axis (33, 85) such that the longitudinal axis (33, 85) is disposed perpendicular to the pivot bearing (26, 57, 58, 75), and the longitudinal axis (33, 85) being disposed such in the manner on a tangent of a pivot radius of the pivot bearing (26, 57, 58, 75) that the contact bump (32, 66, 67, 82) is pivoted about the pivot bearing (26, 57, 58, 75) when contacted with a charging contact, the contact unit (24, 54, 73) comprises a connecting element (27, 59, 76), the contact element (25, 55, 56, 74) being disposable on the contact unit carrier by means of the connecting element, the contact element (25, 55, 56, 74) being connected to the connecting element (27, 59, 76) via the pivot bearing (26, 57, 58, 75).

2. The contact device according to claim 1,
**characterized in that**
the contact element (25, 55, 56, 74) is formed in one piece or multiple pieces.

3. The contact device according to claim 1 or 2,
**characterized in that**
the connecting lead (38, 70, 71) is directly attached to the contact element (25, 55, 56, 74).

4. The contact device according to any one of the preceding claims,
**characterized in that**
the connecting lead (38, 70, 71) has a conductor cross section of at least 50 mm², preferably 95 mm².

5. The contact device according to any one of the preceding claims,
**characterized in that**
the pivot bearing (26, 57, 58, 75) has a bearing bush (44, 45, 80) made of a dielectric material on an axis (40, 63, 79) of the pivot bearing (26, 57, 58, 75).

6. The contact device according to any one of the preceding claims,
**characterized in that**
a spring (46, 65, 81) of the contact unit (24, 54, 73) exerts a spring force on the contact element (25, 55, 56, 74), such that the contact element is pushed in the direction of a charging contact.

7. The contact device according to claim 6,
**characterized in that**
the spring (46, 65, 81) is a coiled torsion spring, which is mounted on an axis (40, 63, 79) of the pivot bearing (26, 57, 58, 75).

8. The contact device according to any one of the preceding claims,
**characterized in that**
the pivot bearing (26, 57, 58, 75) has an electric resistance heating element (64).

9. The contact device according to any one of the preceding claims,
**characterized in that**
the connecting element (27, 59, 76) has a stop (52) which limits a pivoting motion of the contact element (25, 55, 56, 74) relative to the contact unit carrier.

10. The contact device according to any one of the preceding claims,
**characterized in that**
the connecting element (27, 59, 76) forms a connecting bridge (28), two parallel side walls of the contact unit carrier being connectable by means of said connecting bridge.

11. The contact device according to any one of the preceding claims,
**characterized in that**
the contact unit (24, 54, 73) has two contact elements (25, 55, 56, 74) which are each mounted on a pivot bearing (26, 57, 58, 75) so as to be pivotable relative to the contact unit carrier, both contact elements being mounted on the connecting element (27, 59, 76).

12. The contact device according to any one of the preceding claims,
**characterized in that**
the pivot bearings (56, 57, 58, 75) are disposed transversely to each other on the connecting element (27, 59, 76).

13. The contact device according to any one of the preceding claims,
**characterized in that**
the contact unit (24, 54, 73) is configured in such a manner that a current of 500 A to 1000 A, preferably of 800 A at a voltage of 750 V is transmittable via the contact unit.

14. The contact device according to any one of the preceding claims,
**characterized in that**
the positioning device has a pantograph or a pole by means of which the contact unit carrier is positionable in at least the vertical direction relative to the charging contact unit, the contact device being disposable on a vehicle or on a charging station.

15. The contact device according to claim 13 or 14,
**characterized in that**
at least two contact elements (25, 55, 56, 74) protrude at different heights relative to a surface (49) of the contact unit carrier, said surface (49) facing the charging contact unit.

16. The contact device according to any one of claims 13 to 15,
**characterized in that**
the contact unit carrier has a body having passage openings.

17. The contact device according to claim 16,
**characterized in that**
the body is formed by two parallel side walls made of a dielectric material, the side walls being connected to each other by means of connecting bridges (28).

18. A fast charging system comprising a charging contact device and a contact device according to any one of the preceding claims.

19. The fast charging system according to claim 18,
**characterized in that**
the charging contact device forms a receiving opening for the contact unit carrier, the contact unit carrier being insertable into the receiving opening of the charging contact device.

20. The fast charging system according to claim 18,
**characterized in that**
the contact unit carrier forms a receiving opening for the charging contact device, the charging contact device being insertable into the receiving opening of the contact unit carrier.

21. The fast charging system according to any one of claims 18 to 20,
**characterized in that**
the charging contact device and/or a transverse guide of the positioning device have an electric resistance heating element.

## Revendications

1. Dispositif de contact pour un système de chargement rapide pour des véhicules à propulsion électrique, en particulier des autobus électriques ou similaires, le système de chargement rapide comprenant un dispositif de contact de chargement et le dispositif de contact ayant un porteur (10) de l'unité de contact, le porteur de l'unité de contact ayant une pluralité d'unités de contact (24, 54, 73), un contact de chargement du dispositif de contact de chargement pouvant être connecté électriquement à l'unité de contact pour former une paire de contacts, le dispositif de contact ou le dispositif de contact de chargement comprenant un dispositif de positionnement, le porteur de l'unité de contact pouvant être positionné par rapport au dispositif de contact de chargement au moyen du dispositif de positionnement de manière à former une connexion électriquement conductrice entre un véhicule et une station de chargement stationnaire, l'unité de contact (24, 54, 73) comprenant un élément de contact (25, 55, 56, 74), l'unité de contact (24, 54, 73) ayant une ligne de connexion (38, 70, 71) pour être connectée au véhicule ou à la station de chargement, l'élément de contact (25, 55, 56, 74) étant monté sur un palier de pivotement (26, 57, 58, 75) de l'unité de contact (24, 54, 73) de manière à pouvoir être pivoté par rapport au porteur de l'unité de contact, et l'élément de contact (25, 55, 56, 74) étant formé par un bras de levier (31, 68, 69, 83) qui est relié au palier de pivotement (26, 57, 58, 75), ledit bras de levier (31, 68, 69, 83) ayant une bosse de contact (32, 66, 67, 82) en forme de boulon, ladite bosse de contact en forme de boulon formant une surface de contact (34) pour contacter le contact de chargement et pouvant être pivotée sur le palier de pivotement (26, 57, 58, 75) dans la direction de son axe longitudinal (33, 85) de sorte que l'axe longitudinal (33, 85) est disposé perpendiculairement au palier de pivotement (26, 57, 58, 75), et l'axe longitudinal (33, 85) étant disposé d'une manière d'une tangente d'un rayon de pivotement du palier de pivotement (26, 57, 58, 75) que la bosse de contact (32, 66, 67, 82) est pivotée autour du palier de pivotement (26, 57, 58, 75) lorsqu'elle est en contact avec un contact de chargement, l'unité de contact (24, 54, 73) comprenant un élément de connexion (27, 59, 76), l'élément de contact (25, 55, 56, 74) étant disposé sur le porteur de l'unité de contact au moyen de l'élément de connexion, l'élément de contact (25, 55, 56, 74) étant relié à l'élément de connexion (27, 59, 76) par l'intermédiaire du palier de pivotement (26, 57, 58, 75).

2. Dispositif de contact selon la revendication 1,
**caractérisé en ce que**
l'élément de contact (25, 55, 56, 74) est formé d'une ou de plusieurs pièces.

3. Dispositif de contact selon la revendication 1 ou la revendication 2,
**caractérisé en ce que**
la ligne de connexion (38, 70, 71) est directement attachée à l'élément de contact (25, 55, 56, 74).

4. Dispositif de contact selon l'une quelconque des revendications précédentes,
**caractérisé en ce que**
la ligne de connexion (38, 70, 71) a une section de conducteur d'au moins 50 mm², de préférence 95 mm².

5. Dispositif de contact selon l'une quelconque des revendications précédentes,
**caractérisé en ce que**
le palier de pivotement (26, 57, 58, 75) a une garniture de palier (44, 45, 80) en matériau diélectrique sur un axe (40, 63, 79) du palier de pivotement (26, 57, 58, 75).

6. Dispositif de contact selon l'une quelconque des revendications précédentes,
**caractérisé en ce**
**qu'**un ressort (46, 65, 81) de l'unité de contact (24, 54, 73) exerce une force de ressort sur l'élément de contact (25, 55, 56, 74), de sorte que l'élément de contact est poussé dans la direction d'un contact de chargement.

7. Dispositif de contact selon la revendication 6,
**caractérisé en ce que**
le ressort (46, 65, 81) est un ressort de torsion enroulé, qui est monté sur un axe (40, 63, 79) du palier de pivotement (26, 57, 58, 75).

8. Dispositif de contact selon l'une quelconque des revendications précédentes,
**caractérisé en ce que**
le palier de pivotement (26, 57, 58, 75) a un élément (64) électrique de chauffage par résistance.

9. Dispositif de contact selon l'une quelconque des revendications précédentes,
**caractérisé en ce que**
l'élément de connexion (27, 59, 76) a une butée (52) qui limite un mouvement de pivotement de l'élément de contact (25, 55, 56, 74) par rapport au porteur de l'unité de contact.

10. Dispositif de contact selon l'une quelconque des revendications précédentes,
**caractérisé en ce que**
l'élément de connexion (27, 59, 76) forme un pont de connexion (28), deux parois latérales parallèles du porteur de l'unité de contact pouvant être connectées au moyen dudit pont de connexion.

11. Dispositif de contact selon l'une quelconque des revendications précédentes,
**caractérisé en ce que**
l'unité de contact (24, 54, 73) a deux éléments de contact (25, 55, 56, 74) qui sont chacun montés sur un palier de pivotement (26, 57, 58, 75) de manière à pouvoir être pivotés par rapport au porteur de l'unité de contact, les deux éléments de contact étant montés sur l'élément de connexion (27, 59, 76).

12. Dispositif de contact selon l'une quelconque des revendications précédentes,
**caractérisé en ce que**
les paliers de pivotement (56, 57, 58, 75) sont disposés transversalement l'un par rapport à l'autre sur l'élément de connexion (27, 59, 76).

13. Dispositif de contact selon l'une quelconque des revendications précédentes,
**caractérisé en ce que**
l'unité de contact (24, 54, 73) est configurée de telle manière qu'un courant de 500 A à 1000 A, de préférence de 800 A à une tension de 750 V, peut être transmis par l'unité de contact.

14. Dispositif de contact selon l'une quelconque des revendications précédentes,
**caractérisé en ce que**
le dispositif de positionnement a un pantographe ou un poteau au moyen duquel le porteur de l'unité de contact est positionnable au moins dans la direction verticale par rapport à l'unité de contact de chargement, le dispositif de contact pouvant être disposé sur un véhicule ou sur une station de charge.

15. Dispositif de contact selon la revendication 13 ou la revendication 14,
**caractérisé en ce**
**qu'**au moins deux éléments de contact (25, 55, 56, 74) font saillie à des hauteurs différentes par rapport à une surface (49) du porteur de l'unité de contact, ladite surface (49) faisant face à l'unité de contact de charge.

16. Dispositif de contact selon l'une quelconque des revendications 13 à 15,
**caractérisé en ce que**
le porteur de l'unité de contact a un corps ayant des ouvertures de passage.

17. Dispositif de contact selon la revendication 16,
**caractérisé en ce que**
le corps est formé de deux parois latérales parallèles en matériau diélectrique, les parois latérales étant reliées l'une à l'autre au moyen des ponts de connexion (28).

18. Système de chargement rapide comprenant un dispositif de contact de chargement et un dispositif de contact selon l'une quelconque des revendications précédentes.

19. Système de chargement rapide selon la revendication 18,
**caractérisé en ce que**
le dispositif de contact de chargement forme une ouverture de réception pour le porteur de l'unité de contact, le porteur de l'unité de contact pouvant être inséré dans l'ouverture de réception du dispositif de contact de chargement.

20. Système de chargement rapide selon la revendication 18,
**caractérisé en ce que**
le porteur de l'unité de contact forme une ouverture de réception pour le dispositif de contact de chargement, le dispositif de contact de chargement pouvant être inséré dans l'ouverture de réception du porteur de l'unité de contact.

21. Système de chargement rapide selon l'une quelconque des revendications 18 à 20,
**caractérisé en ce que**
le dispositif de contact de chargement et/ou un guide transversal du dispositif de positionnement ont un élément électrique de chauffage par résistance.
